# EUROPÄISCHE PATENTSCHRIFT

(11) **EP 3 673 553 B1**
(45) Veröffentlichungstag und Bekanntmachung des Hinweises auf die Patenterteilung: **01.09.2021**
(21) Anmeldenummer: 18746691.7
(22) Anmeldetag: 27.07.2018
(51) Int. Cl.: H02J 7/00, B60L 50/60, H01M 10/42, H01M 10/44

(54) **AKKUMULATORANORDNUNG MIT VERBESSERTER SYMMETRIERUNG**
BATTERY ASSEMBLY WITH IMPROVED SYMMETRY
ENSEMBLE D'ACCUMULATEURS À SYMÉTRIE AMÉLIORÉE

(30) Priorität: 23.08.2017 DE 102017214699
(43) Veröffentlichungstag der Anmeldung: 01.07.2020
(73) Patentinhaber: Bayerische Motoren Werke Aktiengesellschaft, 80809 München (DE)
(72) Erfinder: ROTHE, Steffen, 01326 Dresden (DE)
(86) Internationale Anmeldenummer: PCT/EP2018/070370
(87) Internationale Veröffentlichungsnummer: WO 2019/038021

(56) Entgegenhaltungen:
- US-A- 5 773 159
- US-A1- 2006 194 102

## Beschreibung

Die vorliegende Erfindung betrifft eine Akkumulatoranordnung gemäß dem Oberbegriff des Anspruchs 1, einen elektrischen Antrieb mit einer an eine solche Akkumulatoranordnung angeschlossenen elektrischen Maschine gemäß Anspruch 9 sowie ein Kraftfahrzeug 10, welches einen derartigen elektrischen Antrieb aufweist.

Um bei einer Akkumulatoranordnung, die verschiedene Akkumulatoreinheiten enthält, die hierdurch lieferbare Spannung möglichst gleichmäßig zu machen und dadurch eine möglichst gute Leistungsfähigkeit zu erzielen, wurden sogenannte Spannungssymmetrierschaltungen (häufig auch als battery cell balancing circuits bezeichnet) entwickelt. So ist beispielsweise in der US 2005/0269989 A1 eine derartige Schaltung beschrieben, welche die zu symmetrierenden Akkumulatoreinheiten - die auch mehrere Akkumulatorzellen umfassen können - durch eine Spannungsfolgerschaltung an einem parallel geschalteten Spannungsteiler (Referenz) abgleicht. Ferner wurde diese Schaltung gemäß US 2014/0035360 A1 so verschaltet, dass diese auch beliebig skalierbar wurde.

In der DE 10 2016 207 555 A1 ist eine Akkumulatoranordnung gemäß dem Oberbegriff des Anspruchs 1 beschrieben, bei der als Referenz eine andere in Reihe verschaltete Zellspannung genutzt wird. Der Faktor der Zellspannung der "Vorgängerzelle" ist dabei -1, und der Faktor des "Nachfolgers" ist 2. Hierbei wird auf die zu symmetrierenden Akkumulatoreinheiten durch Laden und Entladen eingewirkt. Im Fall des Entladens wird Energie aus den Zellen bzw. Akkumulatoreinheiten in Wärme umgewandelt und damit gleichsam vernichtet. Dies beeinträchtigt die Energieeffizienz. Weitere Dokumente zum Stand der Technik sind US 5 773 159 A und US 2006/194102 A1.

Der vorliegenden Erfindung liegt die Aufgabe zugrunde, eine Ackumulatoranordnung anzugeben, bei der das vorgenannte Problem der beeinträchtigten Energieeffizienz beseitigt ist.

Diese Aufgabe wird gelöst mit einer Akkumulatoranordnung gemäß Anspruch 1. Vorteilhafte Weiterbildungen der Erfindung sind Gegenstand der abhängigen Ansprüche.

Einige vorteilhafte Ausführungsformen der Erfindung werden nachfolgend anhand der Figuren beispielhaft erläutert.

Es zeigen:
Fig. 1 eine erste Ausführungsform der erfindungsgemäßen Akkumulatoranordnung mit einem Differenzverstärker, der als Spannungssymmetrierer per nicht-invertierendem Verstärker beschaltet ist;
Fig. 2 eine zweite Ausführungsform der erfindungsgemäßen Ackumulatoranordnung mit mehreren in Serie geschalteten Akkumulatoreinheiten und kaskadiert geschalteten Differenzverstärkern, die jeweils als Spannungssymmetrierer per nicht-invertierendem Verstärker beschaltet sind;
Fig. 3 eine dritte Ausführungsform der erfindungsgemäßen Akkumulatoranordnung mit einem Differenzverstärker, der als Spannungssymmetrierer per invertierendem Verstärker beschaltet ist;
Fig. 4 eine vierte Ausführungsform der erfindungsgemäßen Akkumulatoranordnung mit mehreren in Serie geschalteten Akkumulatoreinheiten und kaskadiert geschalteten Differenzverstärkern, die jeweils als Spannungssymmetrierer per invertierendem Verstärker beschaltet sind;
Fig. 5 ein Beispiel, das nicht unter die vorliegende Erfindung fällt, mit einem Differenzverstärker, der als Spannungssymmetrierer per Spannungsfolgerschaltung beschaltet ist; und
Fig. 6 ein Beispiel, das nicht unter die vorliegende Erfindung fällt, mit mehreren in Serie geschalteten Akkumulatoreinheiten und kaskadiert geschalteten Differenzverstärkern, die jeweils als Spannungssymmetrierer per Spannungsfolgerschaltung beschaltet sind.

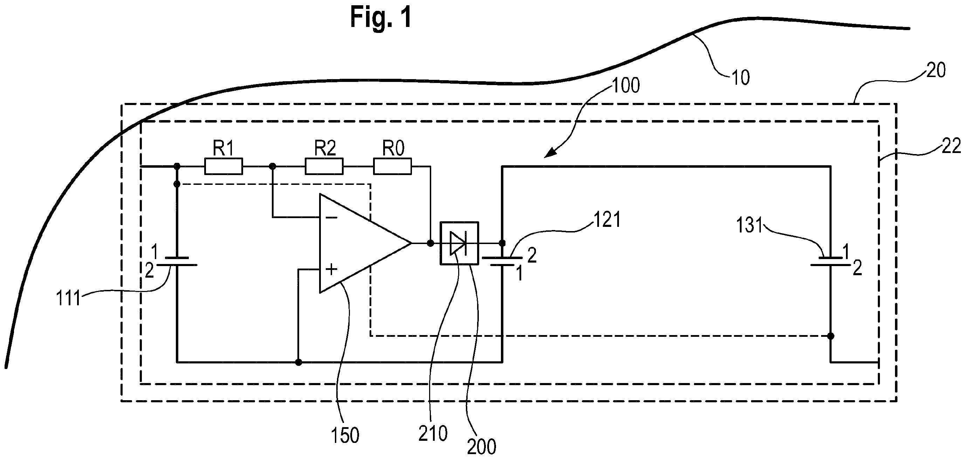

In Fig. 1 ist eine erste Ausführungsform einer erfindungsgemäßen Akkumulatoranordnung 100 dargestellt. Eine erste Akkumulatoreinheit 111 und eine zweite Akkumulatoreinheit 121 sowie eine dritte Akkumulatoreinheit 131 sind in Serie geschaltet. Es ist ein als Operationsverstärker ausgebildeter Differenzverstärker 150 vorgesehen, dessen Ausgang mit einem zweiten Pol der zweiten Akkumulatoreinheit 121, hier dem positiven Pol, gekoppelt ist. Ein nicht-invertierender Eingang des Differenzverstärkers 150 ist mit dem positiven Pol der ersten Akkumulatoreinheit 111 verbunden. Ein invertierender Eingang des Differenzverstärkers 150 ist über einen ersten Widerstand R1 mit dem ersten Pol der ersten Akkumulatoreinheit 111, hier dem negativen Pol, verbunden. Der nicht-invertierende Eingang des Differenzverstärkers 150 ist über einen zweiten Widerstand R2 sowie einen Widerstand R0 mit dem Ausgang des Differenzverstärkers 150 und mit dem positiven Pol der zweiten Akkumulatoreinheit 121 verbunden. Bei dieser ersten Ausführungsform arbeitet der Differenzverstärker 150 aufgrund seiner Beschaltung als Spannungsverstärker mit dem Verstärkungsfaktor 2.

Erfindungsgemäß ist zwischen den Ausgang des Differenzverstärkers 150 - hinter der Verbindungsstelle der Rückkopplungsschleife - und den zweiten Pol der zweiten Akkumulatoreinheit 121 ein Koppelglied 200, das hier als "einfache" Diode 210 ausgebildet ist, geschaltet. Diese Diode 210 verhindert, dass die zweite Akkumulatoreinheit 121 für die Symmetrierung der gesamten Akkumulatoranordnung 100 entladen wird, während sie andererseits ermöglicht, dass die zweite Akkumulatoreinheit 121 für die Zwecke des Symmetrierung geladen wird. Dadurch wird eine höhere Energieeffizienz erreicht, da keine in der zweiten Ackumulatoreinheit 121 enthaltene Energie durch Entladen in Wärme umgewandelt wird und damit verloren geht. Es bleibt zu erwähnen, dass auch eine andere Diode, wie beispielsweise eine Zener-Diode, statt der vorgenannten "einfachen" Diode 210 verwendet werden kann. Hierbei ist zu beachten, dass die Beschaltung des Differenzverstärkers 150 so vorgenommen ist, dass die Schleusenspannung der Diodenkennlinie und der Flusswiderstand der Diode annähernd bis vollständig kompensiert wird. Die Auslegung von R0 in den Schaltungen kann so erfolgen, dass der Differenzverstärker am Ausgang eine Spannung bereitstellt, welche sich aus der Spannung der Akkumulatoreinheit im geladenen Zustand und der Schleusenspannung der verwendeten Diode zusammensetzt. Der Flusswiderstand der Diode kann ebenfalls durch R1 und R2 annähernd kompensiert werden.

Wie in Fig. 1 dargestellt, dient der erste Pol der ersten Akkumulatoreinheit 111 sowie der zweite Pol der dritten Akkumulatoreinheit 131 als Spannungsversorgung bzw. Referenz für den Differenzverstärker 150.

Es versteht sich, dass bei dieser Ausführungsform die erste Ackumulatoreinheit 121 aus einer einzigen Akkumulatorzelle oder einer Mehrzahl von in Serie hintereinander geschalteten Akkumulatorzellen gebildet sein kann.

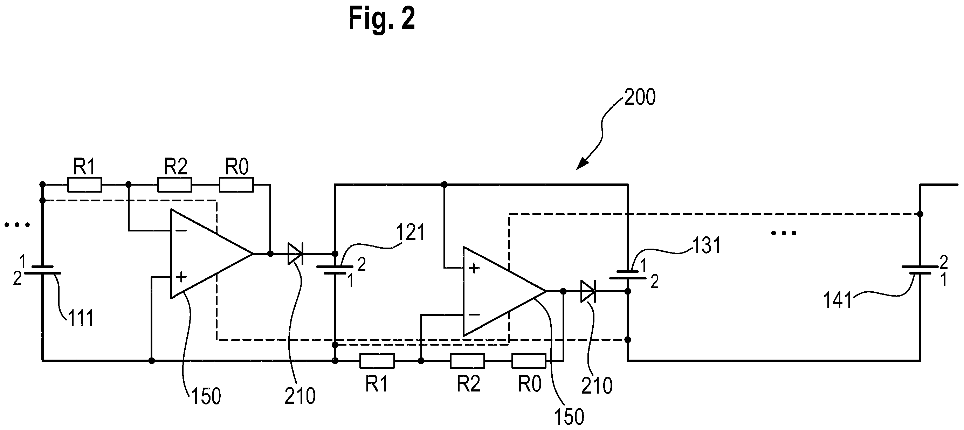

Ferner kann sich ein Strang von in Serie geschalteten Akkumulatoreinheiten 111, 121, 131, 141 und/oder Akkumulatorgruppen vollständig symmetrieren, wenn alle Akkumulatoreinheiten des Stranges so geschaltet sind, wie es in der kaskadierten Anordnung von Fig. 2 dargestellt ist, die eine zweite Ausführungsform der erfindungsgemäßen Ackumulatoranordnung 200 darstellt. Die im Zusammenhang mit der ersten Ausführungsform vorgenommenen Erläuterungen gelten auch für diese zweite Ausführungsform sowie für die weiteren Ausführungsformen, sofern nichts Gegenteiliges ausgeführt wird oder sofern sich dieses nicht von selbst verbietet.

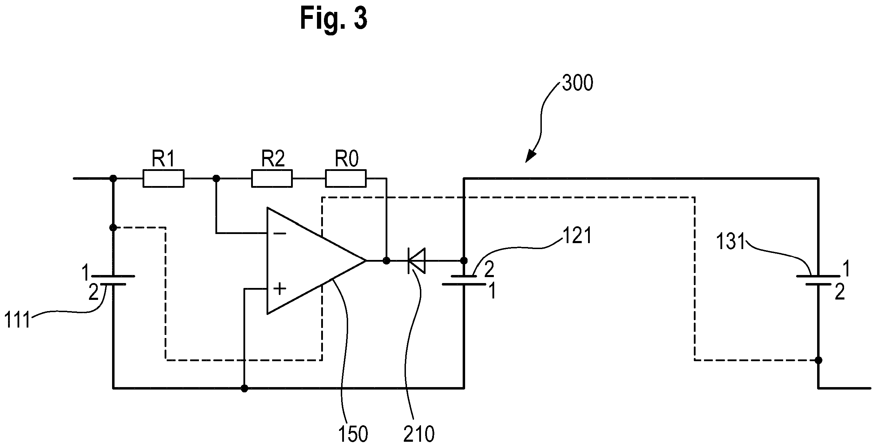

Fig. 3 zeigt eine dritte Ausführungsform der erfindungsgemäßen Akkumulatoranordnung 300, die im Wesentlichen komplementär zur ersten Ausführungsform ist. Eine erste Akkumulatoreinheit 111 und eine zweite Akkumulatoreinheit 121 sind in Serie geschaltet. Der Ausgang des Differenzverstärkers 150 ist an den zweiten, negativen Pol der zweiten Akkumulatoreinheit 121 angeschlossen. Der nicht-invertierende Eingang des Differenzverstärkers 150 ist an den negativen Pol der ersten Akkumulatoreinheit 111 angeschlossen, und der invertierende Eingang des Differenzverstärkers 150 ist über einen ersten Widerstand R1 mit einem ersten, positiven Pol der ersten Akkumulatoreinheit 111 gekoppelt. Außerdem ist der invertierende Eingang des Differenzverstärkers 150 über einen zweiten Widerstand R2 sowie einen Widerstand R0 mit dem Ausgang des Differenzverstärkers 150 bzw. mit dem negativen Pol der zweiten Akkumulatoreinheit 121 gekoppelt.

Mit umgekehrter Polung wie bei der ersten Ausführungsform ist hier eine Diode 210 zwischen den Ausgang des Differenzverstärkers 150 und den zweiten Anschluss der zweiten Akkumulatoreinheit 121 geschaltet. Dadurch kann die Diode 210 die gleiche Funktion wie bei der ersten Ausführungsform erfüllen.

Bei dieser dritten Ausführungsform weist der Differenzverstärker 150 aufgrund seiner Beschaltung eine Verstärkung von -1 auf. Der Wert des ersten Widerstands R1 und der Wert des zweiten Widerstands R2 sind bei dieser Ausführungsform identisch.

Durch den Differenzverstärker 150 und dessen Beschaltung wird erreicht, dass an den Anschlüssen der ersten Akkumulatoreinheit 111 und der zweiten Akkumulatoreinheit 121 das gleiche Potenzial anliegt. Folglich sind die erste Akkumulatoreinheit 111 und die zweite Akkumulatoreinheit 121 zueinander symmetriert. Wie bereits erwähnt, wird durch die Symmetrierung erreicht, dass ein höherer Anteil der Ladung in den Akkumulatoreinheiten 111, 121 für daran angeschlossene Stromverbraucher verfügbar ist.

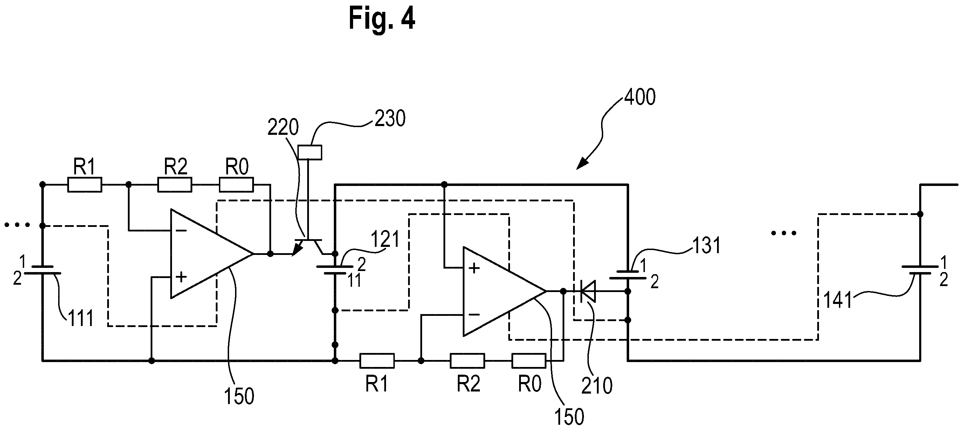

Ähnlich wie bei der in Fig. 2 gezeigten zweiten Ausführungsform ist es auch bei einer in Fig. 4 dargestellten vierten Ausführungsform der Akkumulatoranordnung 400 möglich, mehrere Differenzverstärker 150 kaskadiert anzuordnen, um mehr als nur zwei bzw. drei Akkumulatoreinheiten 111, 121, 131 zu symmetrieren. Als Alternative zur Verwendung der bei den ersten drei Ausführungsformen verwendeten Diode 210 ist bei dieser vierten Ausführungsform beispielhaft ein Transistor 220 dargestellt. Bei entsprechender Beschaltung und Ansteuerung durch eine lediglich schematisch dargestellte Ansteuereinrichtung 230 dieses Transistors 220 kann der Transistor 220 die gleiche Funktion ausführen wie die Diode 210. Darüber hinaus ist es möglich, den Transistor 220 so anzusteuern, dass er eine Möglichkeit der Entladung der zweiten Akkumulatoreinheit 121 (bzw. jedweder anderen Akkumulatoreinheit, der er zugeordnet ist) bietet. Durch geeignete Steuerung kann dabei das Maß der Entladung der betreffenden Akkumulatoreinheit auf eine gewünschte Höchstgrenze beschränkt werden. Es versteht sich, dass auch bei allen übrigen Ausführungsformen derartige Transistoren 220 anstelle der dargestellten Dioden 210 eingesetzt werden können.

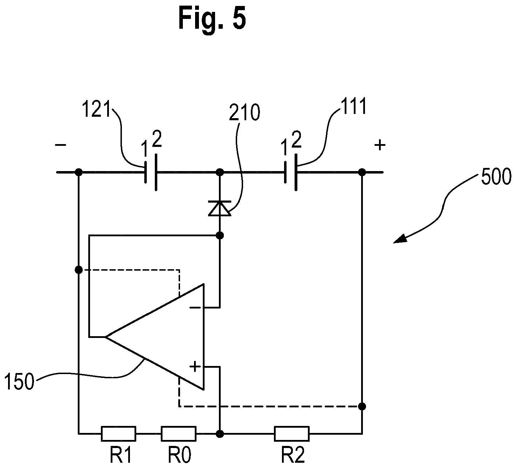

In Fig. 5 ist ein Ausführungsbeispiel, welches nicht unter die vorliegende Erfindung fällt, dargestellt. Ein Differenzverstärker 150 ist dabei so beschaltet, dass er eine Spannungsfolgerschaltung für die Spannungssymmetrierung bildet. Wiederum sind eine erste Akkumulatoreinheit 111 und eine zweite Akkumulatoreinheit 121 in Serie geschaltet. Der Ausgang des Differenzverstärkers 150 ist über eine Diode 210 mit einer Stelle zwischen dem ersten, negativen Pol der ersten Akkumulatoreinheit 111 und dem zweiten, positiven Pol der zweiten Akkumulatoreinheit 121 verbunden. Der nicht-invertierende Eingang des Differenzverstärkers 150 ist über einen ersten Widerstand R1 sowie einen Widerstand R0 an den negativen Pol der zweiten Akkumulatoreinheit 121 angeschlossen sowie über einen zweiten Widerstand R2 an den positiven Pol der ersten Akkumulatoreinheit 111 angekoppelt. Der invertierende Eingang des Differenzverstärkers 150 ist mit dem Ausgang des Differenzverstärkers 150 verbunden und damit ebenfalls mit der Stelle zwischen dem ersten, negativen Pol der ersten Akkumulatoreinheit 111 und dem zweiten, positiven Pol der zweiten Akkumulatoreinheit 121 verbunden. Diese Spannungsfolgerschaltung weist aufgrund ihrer Beschaltung eine Verstärkung von 1 auf. In diesem Fall werden die Spannungen des parallelen Spannungsteilers den Zellen aufgeprägt.

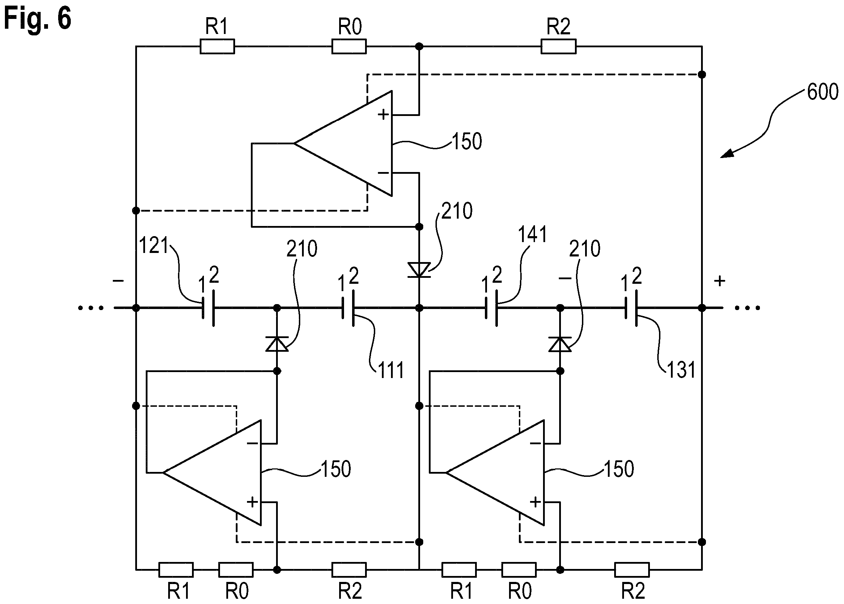

Gemäß Darstellung in Fig. 6, welche ein Ausführungsbeispiel darstellt, das nicht unter die vorliegende Erfindung fällt, können analog zu der zweiten und der vierten Ausführungsform mehrere Differenzverstärker 150 in einer erfindungsgemäßen Akkumulatoranordnung 600 vorgesehen und in einer Kaskaden-Anordnung für mehrere Akkumulatoreinheiten 111, 121, 131, 141 eingesetzt werden. In der aus der eingangs genannten US 2005/0269989 A1 bekannten Symmetrierschaltung kann ebenfalls eine Diode hinter der Gegenkopplung des Differenzverstärkers bzw. Operationsverstärkers geschalten und eine Anpassung der Verstärkung an die Diodenkennlinie über einen zusätzlichen Widerstand R0 vorgenommen werden. Diese Grundschaltung kann - in Anlehnung an die US 2014/0035360 A1 - in der in Fig. 6 dargestellten Weise skaliert werden, so dass über Spannungsteiler im unteren Bereich durch Spannungsfolgerschaltungen jeweils Blöcke von zwei Zellen symmetriert werden. Zusätzlich symmetriert ein zweiter Spannungsteiler im oberen Bereich ebenfalls über eine Spannungsfolgerschaltung übergreifend die zwei Zellblöcke.

Es ist festzuhalten, dass die unter Bezug auf einzelne Ausführungsformen bzw. Varianten beschriebenen Merkmale der Erfindung, wie beispielsweise Art und Ausgestaltung des Koppelglieds sowie der einzelnen Widerstände sowie deren räumliche Anordnung, auch bei anderen Ausführungsformen vorhanden sein können, außer wenn es anders angegeben ist oder sich aus technischen Gründen von selbst verbietet.

## Patentansprüche

1. Akkumulatoranordnung (100; 200; 300; 400; 500; 600), umfassend:
eine erste Akkumulatoreinheit (111) mit einem ersten Anschluss und einem zweiten Anschluss;
eine in Serie zur ersten Akkumulatoreinheit (111) geschaltete zweite Akkumulatoreinheit (121) mit einem ersten Anschluss und einem zweiten Anschluss; und
einen Differenzverstärker (150) mit einem invertierenden Eingang, einem nicht-invertierenden Eingang und einem Ausgang, an dem eine verstärkte Differenz zwischen dem Signal am invertierenden Eingang und dem Signal am nicht-invertierenden Eingang anliegt; wobei
- der nicht-invertierende Eingang des Differenzverstärkers (150) mit dem zweiten Anschluss der ersten Akkumulatoreinheit (111) und dem ersten Anschluss der zweiten Akkumulatoreinheit (121) verbunden ist,
- der invertierende Eingang des Differenzverstärkers (150) mit dem ersten Anschluss der ersten Akkumulatoreinheit (111) und mit dem zweiten Anschluss der zweiten Akkumulatoreinheit (121) gekoppelt ist, sowie
- der Ausgang des Differenzverstärkers (150) an den zweiten Anschluss der zweiten Akkumulatoreinheit (121) angeschlossen ist;
**dadurch gekennzeichnet, dass** zwischen den Ausgang des Differenzverstärkers (150) und den zweiten Anschluss der zweiten Akkumulatoreinheit (121) ein Koppelglied (200) mit zwei Lastanschlüssen geschaltet ist, welches das Aufladen der zweiten Akkumulatoreinheit (121) über das Koppelglied (200) ermöglicht, jedoch höchstens ein geringfügiges Entladen der zweiten Akkumulatoreinheit (121) in Richtung zum Ausgang des Differenzverstärkers (150) zulässt,
wobei der erste Pol der ersten Akkumulatoreinheit (111) sowie der zweite Pol einer dritten in Serie geschalteten Akkumulatoreinheit (131) als Spannungsversorgung oder Referenz für den Differenzverstärker (150) dienen.

2. Akkumulatoranordnung (100; 200; 300; 400; 500; 600) nach Anspruch 1,
**dadurch gekennzeichnet, dass** das Koppelglied (200) eine Diode (210) ist.

3. Akkumulatoranordnung (300) nach Anspruch 1,
**dadurch gekennzeichnet, dass** das Koppelglied (200) ein Transistor (220) ist, der so in einem Bereich steuerbar ist, dass die zweite Ackumulatoreinheit in Richtung zum Ausgang des Differenzverstärkers (150) hin überhaupt nicht oder bis zu einem bestimmten geringfügigen Maß entladbar ist.

4. Akkumulatoranordnung (300; 400) nach einem der Ansprüche 1 bis 3,
**dadurch gekennzeichnet, dass** der Differenzverstärker (150) so beschaltet ist, dass er als Spannungssymmetrierer per invertierendem Verstärker ausgestaltet ist.

5. Akkumulatoranordnung (200; 400; 600) nach einem der vorhergehenden Ansprüche,
**dadurch gekennzeichnet, dass** eine Mehrzahl von Differenzverstärkern (150) vorgesehen ist, die kaskadiert geschaltet sind.

6. Akkumulatoranordnung (100; 200; 300; 400; 500; 600) nach einem der vorhergehenden Ansprüche,
**dadurch gekennzeichnet, dass** die dritte Akkumulatoreinheit (131) mit einem ersten Anschluss und einem zweiten Anschluss vorgesehen ist, wobei deren zweiter Anschluss sowie der Versorgungsanschluss des Differenzverstärkers (150) an einen zweiten Pol der Spannungsversorgung angeschlossen ist, während der erste Anschluss der ersten Akkumulatoreinheit (121) sowie der Versorgungsanschluss des Differenzverstärkers (150) an einen ersten Pol der Spannungsversorgung angeschlossen ist.

7. Elektrischer Antrieb (20), mit einer elektrischen Maschine (22), die an der Akkumulatoranordnung (100; 200; 300; 400; 500; 600) gemäß einem der Ansprüche 1 bis 8 angeschlossen ist.

8. Kraftfahrzeug (10), umfassend einen elektrischen Antrieb (20) gemäß Anspruch 7.

## Claims

1. Rechargeable battery assembly (100; 200; 300; 400; 500; 600), comprising:
a first rechargeable battery unit (111) having a first terminal and a second terminal;
a second rechargeable battery unit (121) having a first terminal and a second terminal, said second rechargeable battery unit being connected in series with the first rechargeable battery unit (111); and
a differential amplifier (150) having an inverting input, a non-inverting input and an output, at which an amplified difference between the signal at the inverting input and the signal at the non-inverting input is present; wherein
- the non-inverting input of the differential amplifier (150) is connected to the second terminal of the first rechargeable battery unit (111) and to the first terminal of the second rechargeable battery unit (121),
- the inverting input of the differential amplifier (150) is coupled to the first terminal of the first rechargeable battery unit (111) and to the second terminal of the second rechargeable battery unit (121), and
- the output of the differential amplifier (150) is connected to the second terminal of the second rechargeable battery unit (121);
**characterized in that** a coupling element (200) having two load terminals is connected between the output of the differential amplifier (150) and the second terminal of the second rechargeable battery unit (121), which coupling element enables the second rechargeable battery unit (121) to be charged via the coupling element (200), but permits at most slight discharging of the second rechargeable battery unit (121) in the direction of the output of the differential amplifier (150),
wherein the first pole of the first rechargeable battery unit (111) and the second pole of a third series-connected rechargeable battery unit (131) serve as a voltage supply or a reference for the differential amplifier (150).

2. Rechargeable battery assembly (100; 200; 300; 400; 500; 600) according to Claim 1,
**characterized in that** the coupling element (200) is a diode (210).

3. Rechargeable battery assembly (300) according to Claim 1,
**characterized in that** the coupling element (200) is a transistor (220), which is controllable in a range such that the second rechargeable battery unit is not dischargeable at all, or is dischargeable to a specific slight extent, in the direction toward the output of the differential amplifier (150).

4. Rechargeable battery assembly (300; 400) according to any of Claims 1 to 3,
**characterized in that** the differential amplifier (150) is interconnected such that it is configured as a voltage balancing unit by way of an inverting amplifier.

5. Rechargeable battery assembly (200; 400; 600) according to any of the preceding claims, **characterized in that** a plurality of differential amplifiers (150) are provided, which are connected in a cascaded manner.

6. Rechargeable battery assembly (100; 200; 300; 400; 500; 600) according to any of the preceding claims, **characterized in that** the third rechargeable battery unit (131) having a first terminal and a second terminal is provided, wherein the second terminal of said third rechargeable battery unit and the supply terminal of the differential amplifier (150) are connected to a second pole of the voltage supply, while the first terminal of the first rechargeable battery unit (121) and the supply terminal of the differential amplifier (150) are connected to a first pole of the voltage supply.

7. Electric drive (20), comprising an electric machine (22) connected to the rechargeable battery assembly (100; 200; 300; 400; 500; 600) according to any of Claims 1 to 8.

8. Motor vehicle (10), comprising an electric drive (20) according to Claim 7.

## Revendications

1. Ensemble d'accumulateurs (100 ; 200 ; 300 ; 400 ; 500 ; 600), comprenant :
une première unité d'accumulateur (111) dotée d'une première borne et d'une deuxième borne ;
une deuxième unité d'accumulateur (121) dotée d'une première borne et d'une deuxième borne, connectée en série avec la première unité d'accumulateur (111) ; et
un amplificateur différentiel (150) doté d'une entrée inverseuse, d'une entrée non inverseuse et d'une sortie à laquelle est appliquée une différence amplifiée entre le signal à l'entrée inverseuse et le signal à l'entrée non inverseuse ; dans lequel
- l'entrée non inverseuse de l'amplificateur différentiel (150) est reliée à la deuxième borne de la première unité d'accumulateur (111) et à la première borne de la deuxième unité d'accumulateur (121),
- l'entrée inverseuse de l'amplificateur différentiel (150) est couplée à la première borne de la première unité d'accumulateur (111) et à la deuxième borne de la deuxième unité d'accumulateur (121), et
- la sortie de l'amplificateur différentiel (150) est connectée à la deuxième borne de la deuxième unité d'accumulateur (121) ;
**caractérisé en ce qu'**entre la sortie de l'amplificateur différentiel (150) et la deuxième borne de la deuxième unité d'accumulateur (121), un élément de couplage (200) doté de deux bornes de charge est monté qui permet de recharger la deuxième unité d'accumulateur (121) par l'intermédiaire de l'élément de couplage (200) mais autorise tout au plus un léger déchargement de la deuxième unité d'accumulateur (121) en direction de la sortie de l'amplificateur différentiel (150),
le premier pôle de la première unité d'accumulateur (111) ainsi que le deuxième pôle d'une troisième unité d'accumulateur (131) connectée en série servant d'alimentation en tension ou de référence pour l'amplificateur différentiel (150).

2. Ensemble d'accumulateurs (100 ; 200 ; 300 ; 400 ; 500 ; 600) selon la revendication 1, **caractérisé en ce que** l'élément de couplage (200) est une diode (210).

3. Ensemble d'accumulateurs (300) selon la revendication 1, **caractérisé en ce que** l'élément de couplage (200) est un transistor (220) qui peut être commandé dans une plage de telle sorte qu'en direction de la sortie de l'amplificateur différentiel (150), la deuxième unité d'accumulateur ne peut pas du tout être déchargée ou peut être déchargée jusqu'à une faible mesure déterminée.

4. Ensemble d'accumulateurs (300 ; 400) selon l'une quelconque des revendications 1 à 3, **caractérisé en ce que** l'amplificateur différentiel (150) est câblé de telle sorte qu'il est configuré comme un équilibreur de tension pour chaque amplificateur inverseur.

5. Ensemble d'accumulateurs (200 ; 400 ; 600) selon l'une quelconque des revendications précédentes, **caractérisé en ce qu'**une pluralité d'amplificateurs différentiels (150) est prévue qui sont montés en cascade.

6. Ensemble d'accumulateurs (100 ; 200 ; 300 ; 400 ; 500 ; 600) selon l'une quelconque des revendications précédentes,
**caractérisé en ce que** la troisième unité d'accumulateur (131) est prévue avec une première borne et une deuxième borne,
leur deuxième borne ainsi que la borne d'alimentation de l'amplificateur différentiel (150) étant connectées à un deuxième pôle de l'alimentation en tension alors que la première borne de la première unité d'accumulateur (121) ainsi que la borne d'alimentation de l'amplificateur différentiel (150) sont connectées à un premier pôle de l'alimentation en tension.

7. Dispositif d'entraînement électrique (20), comprenant une machine électrique (22) qui est connectée à l'ensemble d'accumulateurs (100 ; 200 ; 300 ; 400 ; 500 ; 600) selon l'une quelconque des revendications 1 à 8.

8. Véhicule automobile (10), comprenant un dispositif d'entraînement électrique (20) selon la revendication 7.
